# EUROPÄISCHE PATENTSCHRIFT

(11) **EP 2 829 349 B1**
(45) Veröffentlichungstag und Bekanntmachung des Hinweises auf die Patenterteilung: **20.12.2017**
(21) Anmeldenummer: 13003746.8
(22) Anmeldetag: 26.07.2013
(51) Int. Cl.: B23K 9/167, B23K 9/29

(54) **Schweißbrenner und Schweißgerät mit Hohlelektrode und potentialfrei zugeführtem Schweißzusatzwerkstoff, Schweißverfahren und Verwendung eines Prozessgases**
Welding torch and welding device with hollow electrode and potential-free fed welding material, welding method and use of a process gas
Brûleur de soudage et appareil de soudage avec électrode creuse et matériau d'apport de soudage ajouté sans potentiel, procédé de soudage et utilisation d'un gaz de processus

(43) Veröffentlichungstag der Anmeldung: 28.01.2015
(73) Patentinhaber: Linde Aktiengesellschaft, 80331 München (DE)
(72) Erfinder: Miklos, Ernst, 85551 Kirchheim (DE); Savgu, Fatih, 80997 München (DE)

(56) Entgegenhaltungen:
- JP-A- H07 185 801
- JP-A- S60 121 076
- JP-A- S61 119 383
- JP-A- 2010 194 566
- DATABASE WPI Week 197806 Thomson Scientific, London, GB; AN 1978-11208A XP002719379, -& JP S52 155152 A (SUMITOMO METAL IND LTD) 23. Dezember 1977 (1977-12-23)

## Beschreibung

Die Erfindung betrifft einen Schweißbrenner gemäß dem Oberbegriff des Anspruchs 1 (siehe, z.B., JP S61 119383 A), mit Führungsmitteln zum potentialfreien Führen eines drahtförmigen Schweißzusatzwerkstoffs, ein Schweißgerät mit einem derartigen Schweißbrenner (siehe Anspruch 7), ein entsprechendes Schweißverfahren (siehe Anspruch 9) sowie die entsprechende Verwendung eines Prozessgases (siehe Anspruch 15).

### Stand der Technik

Dem Fachmann sind aus dem Stand der Technik unterschiedliche Schweißverfahren bekannt, die sich jeweils für bestimmte schweißtechnische Aufgaben in besonderer Weise eignen. Eine Übersicht geben beispielsweise Dilthey, U.: Schweißtechnische Fertigungsverfahren 1: Schweiß- und Schneidtechnologien. 3. Aufl. Heidelberg: Springer, 2006 oder Davies, A.C.: The Science and Practice of Welding. 10. Aufl. Cambridge: Cambridge University Press, 1993.
Beim Wolfram-Inertgasschweißen (WIG-Schweißen, engl. Tungsten Gas Welding, TIG) brennt ein Lichtbogen zwischen einer nicht abschmelzenden Wolframelektrode und dem zu bearbeitenden Werkstück. Das Werkstück wird hierdurch aufgeschmolzen. Zum Schutz der Wolframelektrode und des sich ausbildenden Schmelzbads vor Oxidation wird wenigstens ein geeignetes Prozessgas eingesetzt, das die Wolframelektrode und das Schmelzbad abdeckt. Je nach Strombelastung werden bei WIG-Verfahren Wolframelektroden mit unterschiedlichen Durchmessern eingesetzt, die typischerweise bleistiftförmig angespitzt sind. Diese enthalten üblicherweise Zulegierungen von Seltenerdoxiden zur Senkung der Elektronenaustrittsarbeit, wodurch die Zündung des Lichtbogens erleichtert und dessen Stabilität erhöht wird. Beim WIG-Schweißen wird typischerweise in inerter, werkstoffabhängig aber bisweilen auch in reduzierender Atmosphäre gearbeitet.
Durch WIG-Verfahren lässt sich typischerweise eine sehr hohe Schweißqualität erreichen, sie sind jedoch nicht beliebig automatisierbar und ermöglichen insbesondere im Vergleich zu den nachfolgend erläuterten Verfahren nur eine vergleichsweise geringe Produktivität aufgrund der geringeren Abschmelzleistung und Schweißgeschwindigkeit.

Beim Metall-Schutzgasschweißen (MSG, engl. Gas Metal Arc Welding, GMAW) wird dem Schweißbrenner eine Drahtelektrode, die damit auch gleichzeitig einen Schweißzusatzwerkstoff bildet, kontinuierlich zugeführt und in einem Lichtbogen abgeschmolzen. Es wird ebenfalls wenigstens ein Prozessgas verwendet. Je nach Art des oder der Prozessgase unterscheidet der Fachmann zwischen Metall-Inertgasschweißen (MIG, engl. Metal Inert Gas Welding) und Metall-Aktivgasschweißen (MAG, engl. Metal Active Gas Welding). Die grundlegenden Verfahrensprinzipien gleichen einander. Typischerweise werden einem MSG-Brenner der Schweißstrom, die Drahtelektrode, das Prozessgas und ggf. erforderliches Kühlwasser durch ein Schlauchpaket zugeführt.

MSG-Verfahren erlauben eine höhere Abschmelzleistung und Schweißgeschwindigkeit und damit eine überlegene Produktivität im Vergleich zu WIG-Verfahren. Die Automatisierbarkeit von MSG-Verfahren ist ausgesprochen hoch. Nachteilig an der Verwendung des direkt im Lichtbogen erhitzten, aufgeschmolzenen und verdampften Zusatzwerkstoffs ist die wesentlich höhere Emission von Partikeln im Vergleich zu WIG-Verfahren. Die mit MSG-Verfahren erzielbare Schweißqualität wird im Vergleich zu WIG-Verfahren häufig als geringer angesehen.

Im Gegensatz zu den genannten Verfahren, bei denen der Lichtbogen frei brennt, wird dieser bei den ebenfalls bekannten Plasmaschweißverfahren eingeschnürt, wofür i.d.R. wassergekühlte Kupferdüsen zum Einsatz kommen. Dies führt zu einer Verringerung des Lichtbogenquerschnitts. Beim Plasmaschweißen wird ebenfalls mit einer nicht abschmelzenden Elektrode gearbeitet. Beim sogenannten Plasma-MIG-Verfahren handelt es sich um ein Hybridverfahren, nämlich ein Plasmaverfahren, bei dem jedoch eine abschmelzende Elektrode eingesetzt wird. Die zur Bildung eines Plasmas erforderlichen Ladungsträger werden jeweils von einem Plasmagas (Argon oder Gemischen aus Argon, Helium und/oder Wasserstoff) geliefert.

Beim Plasmaschweißen mit nicht abschmelzender Elektrode kann ein Lichtbogen innerhalb des Schweißbrenners und/oder zwischen dem Schweißbrenner und dem Werkstück ausgebildet werden (sogenannter "nicht übertragener" bzw. "übertragener" Lichtbogen). Man unterscheidet zwischen Plasmastrahlschweißen (WPS, nicht übertragener Lichtbogen), Plasmalichtbogenschweißen (WPL, übertragener Lichtbogen) und dem kombinierten Plasmastrahl-Plasmalichtbogenschweißen (WPSL, sowohl nicht übertragener als auch übertragener Lichtbogen).
Beim sogenannten Plasma-MIG-Schweißen wird eine abschmelzende Elektrode eingesetzt und ein Plasmalichtbogen zwischen einer Plasmagasdüse und dem bearbeiteten Werkstück gezündet. Der Plasmalichtbogen wird mittels einer sogenannten Fokussiergasdüse und unter Verwendung eines entsprechenden Fokussiergases eingeschnürt. Die Plasmagasdüse, die Fokussiergasdüse und die ebenfalls vorhandene Schutzgasdüse sind koaxial angeordnet. Die wie bei herkömmlichen MSG-Verfahren eingesetzte abschmelzende Drahtelektrode wird zentrisch zugeführt. Sowohl die Plasmagasdüse als auch die Drahtelektrode liegen meist auf positivem Potential und werden üblicherweise von getrennten Stromquellen gespeist. Auch gepulste Ströme oder Wechselstrom können eingesetzt werden.
Die genannten Plasmaverfahren leiden grundsätzlich unter denselben Nachteilen wie die oben erläuterten WIG- und MSG-Verfahren. Es besteht daher der Bedarf nach Verbesserungen bei den genannten Schweißverfahren.

### Offenbarung der Erfindung

Vor diesem Hintergrund schlägt die Erfindung einen Schweißbrenner mit Führungsmitteln zum potentialfreien Führen eines drahtförmigen Schweißzusatzwerkstoffs, ein Schweißgerät mit einem derartigen Schweißbrenner, ein entsprechendes Schweißverfahren (in der Schweißtechnik auch als "Prozess" bezeichnet) sowie die Verwendung mindestens eines Prozessgases mit den Merkmalen der unabhängigen Patentansprüche vor. Bevorzugte Ausgestaltungen sind Gegenstand der abhängigen Patentansprüche sowie der nachfolgenden Beschreibung.

### Vorteile der Erfindung

Ein Schweißbrenner gemäß der Erfindung ist im Anspruch 1 definiert. Wie bereits eingangs erläutert, ist in herkömmlichen Schweißbrennern für MSG-Verfahren das zur Stromführung eingerichtete Element des Schweißbrenners der Schweißzusatzwerkstoff. Der Schweißzusatzwerkstoff wird also in MSG-Verfahren mit dem verwendeten Schweißstrom beaufschlagt. Zwischen dem Schweißzusatzwerkstoff und dem Werkstück wird ein Lichtbogen ausgebildet. In den ebenfalls erläuterten WIG-Verfahren ist hingegen die Wolframelektrode das zur Stromführung eingerichtete Element. Ein Schweißzusatzwerkstoff muss dort, falls verwendet, extern, d.h. immer exzentrisch zum Lichtbogen, zugeführt werden. Dies erfolgt entweder manuell oder mechanisch. In beiden Verfahren ergeben sich die zuvor erläuterten Nachteile, die mittels der Erfindung, wie sie nachfolgend erläutert wird, überwunden werden. Erfindungsgemäß weist der Schweißbrenner eine Hohlelektrode auf, die die erläuterte Achse, entlang derer der drahtförmige Schweißzusatzwerkstoff mittels der Führungsmittel geführt wird, koaxial umgibt. Diese Hohlelektrode ist als das zur Stromführung eingerichtete Element ausgebildet und als solches mit dem Schweißstromanschluss verbunden. Vorzugsweise ist die Hohlelektrode dabei das einzige zur Stromführung eingerichtete Element. Der Schweißzusatzwerkstoff ist damit nicht mit der Stromquelle verbunden und ist während eines entsprechenden Schweißverfahrens potentialfrei. Der erfindungsgemäße Schweißbrenner zeichnet sich damit auch dadurch aus, dass die erläuterten Führungsmittel zum potentialfreien Führen des drahtförmigen Schweißzusatzwerkstoffs ohne elektrische Verbindung des Schweißzusatzwerkstoffs mit dem Schweißstromanschluss ausgebildet sind. Sie sind insbesondere elektrisch von dem Schweißstromanschluss isoliert bzw. stellen selbst eine Isolierung des Schweißzusatzwerkstoffs von dem Schweißstromanschluss her. Als Schweißzusatzwerkstoffe können sämtliche Werkstoffe eingesetzt werden, die aus dem Stand der Technik bekannt sind. Bekannte Schweißzusatzwerkstoffe werden als Drähte mit Durchmessern zwischen 0,6 und 2,4 mm bereitgestellt, können jedoch auch andere Dimensionen aufweisen. Ein "Draht" oder ein Schweißzusatzwerkstoff allgemein muss nicht notwendigerweise einen kreisförmigen Querschnitt aufweisen. Es können auch beispielsweise ovale, rechteckige, quadratische, dreieckige oder andere Querschnitte zum Einsatz kommen. Schweißzusatzwerkstoffe sind auch in Form sogenannter Flachdrähte oder Bänder bekannt. Entsprechende Materialien können beispielsweise Lichtbogenstabilisatoren, Schlackenbildner und Legierungselemente umfassen, die einen ruhigen Schweißprozess begünstigen, zu einem vorteilhaften Schutz der erstarrenden Schweißnaht beitragen und die mechanische Güte der erzeugten Schweißnaht beeinflussen. Zusatzwerkstoffe können als massive Drähte ("Draht" im obigen Sinn) oder sogenannte Fülldrähte eingesetzt werden, wie sie grundsätzlich aus dem Stand der Technik bekannt sind. Je nach den sich spezifisch im Rahmen der vorliegenden Erfindung ausbildenden physikalischen Bedingungen, beispielsweise einem veränderten Zusammenspiel zwischen dem Schweißzusatzwerkstoff und dem Lichtbogen (der sich nun zwischen der Hohlelektrode und dem Werkstück oder einem weiteren Element des Brenners und nicht mehr zwischen dem Schweißzusatzwerkstoff und dem Werkstück oder dem weiteren Element des Brenners ausbildet) kann der Fachmann auch neue, angepasste Schweißzusatzwerkstoffe entwickeln. Die Entkopplung der Stromführung vom Schweißzusatzwerkstoff eröffnet neue Möglichkeiten der Werkstoffbeeinflussung. Damit können ggf. neue Rezepturen eingesetzt werden.

Die vorliegende Erfindung vereinigt aufgrund der vorgeschlagenen Maßnahmen die jeweiligen Vorteile des MSG- und des WIG-Verfahrens. Insbesondere kann durch den Einsatz des erfindungsgemäßen Schweißbrenners die hohe Produktivität bzw. Schweißgeschwindigkeit der MSG-Verfahren erzielt werden. Gleichzeitig ermöglicht der Einsatz des erfindungsgemäßen Schweißbrenners die hohe Schweißqualität der WIG-Verfahren. Weil im Rahmen der vorliegenden Erfindung der Schweißzusatzwerkstoff nicht mit dem Schweißstrom beaufschlagt wird, ergibt sich eine gegenüber bekannten MSG-Verfahren deutlich reduzierte Emission von Partikeln. Dies ist darauf zurückzuführen, dass der Schweißzusatzwerkstoff im Rahmen der vorliegenden Erfindung nicht direkt im Lichtbogen erhitzt, aufgeschmolzen und verdampft sondern vergleichsweise sanft verflüssigt wird.

Mit anderen Worten schafft die vorliegende Erfindung eine Fügetechnologie, die die Abschmelzleistung und die Automatisierbarkeit bekannter MSG-Verfahren erreicht, zugleich aber die geringen Emissionen und die hohe Schweißqualität eines WIG- bzw. Plasmaverfahrens aufweist.

Durch die im Rahmen der vorliegenden Erfindung vorgeschlagenen Maßnahmen können insbesondere auch Plasmaverfahren besonders einfach und kostengünstig mit den erläuterten Vorteilen realisiert werden, wie unten erläutert.

Die Erfindung kann mit unterschiedlichen Schweißstromkonfigurationen verwendet werden. Bekanntermaßen werden die meisten Metalle bei WIG-Verfahren mit Gleichstrom und minusgepolter Elektrode geschweißt. Beispielsweise bei Aluminium- und Magnesiumlegierungen, die niedrige Schmelzpunkte aufweisen und gleichzeitig dichte, schwer schmelzbare Oxidhäute bilden, ist dies jedoch nicht möglich. Diese Werkstoffe werden i.d.R. mit Wechselstrom geschweißt, wobei die negativen Stromanteile zur thermischen Entlastung der Elektrode genutzt werden. Zur Neuzündung des Lichtbogens können dabei kurzzeitige Spannungsspitzen nach jedem Nulldurchgang oder eine hochfrequente Hochspannung eingesetzt werden.

Im Rahmen der vorliegenden Erfindung können insbesondere auch sich in ihrer Zusammensetzung oder in ihrem Volumenstrom verändernde Prozessgasströme zum Einsatz kommen. Die Veränderung kann beispielsweise in Form eines Pulsierens des gesamten Prozessgases oder einer Komponente hiervon mit einer vorgegebenen Frequenz erfolgen, wie beispielsweise in der EP 2 277 655 A1 für das Plasmastichlochschweißen beschrieben. Die Veränderung der Zusammensetzung oder des Volumenstroms oder beispielsweise auch die Frequenz eines Pulsierens kann, wie dort beschrieben, in Abhängigkeit von wenigstens einer Randbedingung des Schweißvorgangs eingestellt werden. Diese Erläuterungen betreffen sämtliche Prozessgasströme, beispielsweise Plasmagas, Fokussiergas und/oder Schutzgas.

Die vorliegende Erfindung bietet insbesondere auch Vorteile gegenüber bekannten Verfahren, die eine Hohlelektrode verwenden, beispielsweise gegenüber WIG-Verfahren mit Hohlelektroden, die als Nischenanwendungen in der Luft- und Raumfahrt eingesetzt werden. In derartigen Anwendungen wird der Zusatzwerkstoff extern zugeführt. Der Schweißbrenner kann daher nur erschwert um seine Längsachse rotiert werden, was die Flexibilität eines derartigen Verfahrens und dessen Automatisierbarkeit deutlich einschränkt. Gemäß der Erfindung ist vorgesehen, den Lichtbogen auf dem Umfang der Hohlelektrode bzw. gegenüber dem Werkstück rotieren zu lassen, was ein erfindungsgemäßes Verfahren besonders prozessstabil macht. Der Lichtbogen läuft also z.B. periodisch um. Hierzu ist gemäß der Erfindung eine Spulenanordnung in den Schweißbrenner integriert, die durch eine geeignete Strombeaufschlagung ein um die erwähnte Achse anliegendes elektrisches und/oder magnetisches Feld erzeugt. Hierzu können auch mehrere Einzelspulen, Wicklungspaare oder auch Dauermagnete um den Umfang des Schweißbrenners verteilt angeordnet sein, so dass nach Art eines Ständers einer elektrischen Maschine ein Drehfeld erzeugt werden kann. Hierdurch kann auf die jeweilige Position des an der Hohlelektrode zündenden Lichtbogens Einfluss genommen werden. Die Rotations- bzw. Umlauffrequenz kann je nach Bedarf eingestellt werden. Die Rotationsfrequenz ist als Funktion von Schweißparametern wie z.B. Strom/Spannung, Schweißposition, Elektrodendurchmesser, Prozessgas, Nahtgeometrie, Oberflächenbeschaffenheit, Schweißgeschwindigkeit, Werkstoff etc. durch den Fachmann einstellbar.
Auch gegenüber den bekannten Plasma-MSG-Verfahren oder ebenfalls bekannten Plasma-Laser-Hybridverfahren, die mit einer Hohlelektrode verwendet werden können, ist die Erfindung vorteilhaft, weil hier der Schweißzusatzwerkstoff nicht mit einem Schweißstrom beaufschlagt wird und es daher zu verringerten Emissionen kommt. Außerdem ist bekannt, dass herkömmliche Plasma-MSG Verfahren relativ instabil verlaufen. Der Lichtbogen an der Hohlelektrode neigt hier zum "Festbrennen", d.h. unter Umständen bewegt sich der Lichtbogen nicht mehr entlang des gesamten Umfanges der Hohlelektrode, beschädigt diese und verursacht ferner einseitige Schweißnahtfehler. Gefördert werden diese Instabilitäten auch durch die gegenseitige elektromagnetische Beeinflussung von stromführendem Schweißzusatzwerkstoff und Hohlelektrode. Beide Nachteile werden im Rahmen der vorliegenden Erfindung beseitigt, weil der Lichtbogen einerseits nicht von dem Schweißzusatzwerkstoff sondern von der Hohlelektrode ausgeht und andererseits mittels des elektrischen und/oder magnetischen Felds aktiv beeinflusst werden kann.
Der erfindungsgemäße Schweißbrenner kann mit einer zumindest abschnittsweise zylindrisch und/oder konisch verlaufenden Hohlelektrode ausgebildet werden. Beispielsweise kann sich eine derartige Hohlelektrode in Richtung der Spitze bzw. des distalen Endes des Schweißbrenners verjüngen, so dass hierdurch ein Fokussierungseffekt erzielt werden kann. Die Form einer entsprechenden Elektrode kann auch einer weiteren koaxial außenliegenden Gasdüse angepasst werden, so dass sich geometrisch besonders günstige Konfigurationen ergeben.

Wie bereits zuvor erläutert, ist die Hohlelektrode im Rahmen der vorliegenden Erfindung als nicht abschmelzende Elektrode und damit aus einem hierfür geeigneten Material ausgebildet.

Ein erfindungsgemäßer Schweißbrenner weist vorteilhafterweise einen ringförmigen Prozessgaskanal auf, der die erläuterte Achse, entlang derer der drahtförmige Schweißzusatzwerkstoff mittels der erläuterten Führungsmittel geführt wird, koaxial umgibt, und der radial außerhalb der Hohlelektrode angeordnet ist. Durch eine derartige Anordnung kann der gesamte Lichtbogen bzw. ein sich ausbildendes Plasma vollständig von einem Prozessgas (beispielsweise einem Schutzgas oder einem Fokussiergas) abgedeckt werden. Die Erfindung ermöglicht damit qualitativ besonders hochwertige Schweißungen. Dieser kann durch die erwähnte koaxiale Prozessgasdüse ausgebildet sein, die zumindest die Führungsmittel für den Schweißzusatzwerkstoff koaxial umgibt.

Ein entsprechender Schweißbrenner kann vorteilhafterweise auch mit einem ringförmigen Prozessgaskanal ausgebildet sein, welcher die erläuterte Achse koaxial umgibt, jedoch radial innerhalb der Hohlelektrode angeordnet ist. Ein derartiger Prozessgaskanal kann beispielsweise zur Bereitstellung eines Plasmagases, wie zuvor erläutert, eingesetzt werden und ist durch die Hohlelektrode selbst oder eine weitere Prozessgasdüse gebildet.

Erfindungsgemäß können dabei auch zwei oder mehrere Prozessgaskanäle in entsprechender Anordnung verwendet werden. Beispielsweise kann ein ringförmiger Prozessgaskanal radial innerhalb und ein ringförmiger Prozessgaskanal radial außerhalb der Hohlelektrode angeordnet sein. Dabei kann beispielsweise der innere Prozessgaskanal dazu verwendet werden, ein Plasmagas bereitzustellen. Der äußere Prozessgaskanal kann zur Bereitstellung eines Fokussiergases verwendet werden.

Für die bereits erwähnten Plasmaverfahren werden Plasmagase verwendet, die Argon oder Gemische aus Argon, Helium und/oder Wasserstoff aufweisen. Hierdurch stehen die zur Bildung des Plasmas erforderlichen Ladungsträger zur Verfügung. Ein entsprechend eingeschnürter Plasmastrahl bzw. Plasmalichtbogen kann insbesondere durch koaxiales Anblasen mit kaltem, elektrisch weniger leitfähigem Gas (dem erwähnten Fokussiergas) und/oder durch eine Schutzgashülle aus gut wärmeleitfähigem aber schwer ionisierbarem Gas (z.B. Helium oder Argon/Wasserstoff-Gemischen), zusätzlich gebündelt werden. Für Plasmaverfahren verwendete Schweißbrenner erfordern i.d.R. ein zusätzliches Schutzgas, das typischerweise aus Argon/Wasserstoff-Gemischen oder aus Argon oder Argon/Helium-Gemischen besteht. Bei Plasmaverfahren wird zwischen Plasmastrahlschweißen, Plasmalichtbogenschweißen und Plasmastrahl-Plasmalichtbogenschweißen unterschieden, wie zuvor erläutert. Die Erfindung kann mit sämtlichen dieser Verfahren kombiniert werden. Zu Details der erläuterten Verfahren sei auf die eingangs erwähnten Fachbücher verwiesen.

Ein erfindungsgemäßer Schweißbrenner, der für ein derartiges Plasmaschweißverfahren einsetzbar ist, weist insbesondere eine als Fokussiergasdüse verwendbare Hohlelektrode auf, die zum Einschnüren eines unter Zuhilfenahme eines Plasmagases ausgebildeten Plasmastrahls bzw. Plasmalichtbogens eingerichtet ist. Innerhalb der Düse wird ein Plasmagas koaxial zu dem Schweißzusatzwerkstoff zugeführt. Zur Bereitstellung des Plasmagases kann ein ringförmiger Kanal oder ein entsprechender Düsenkranz vorgesehen sein. Mittels des Fokussiergases, das koaxial außerhalb des Plasmagases zugeführt wird, beispielsweise mittels der erwähnten Prozessgasdüse, kann der sich ausbildende Plasmastrahl eingeschnürt werden. Typischerweise ist eine hierzu verwendete Prozessgasdüse wassergekühlt und verjüngt sich konisch. Eine entsprechende Anordnung kann von einem weiteren ringförmigen Prozessgaskanal umgeben sein, mittels dessen ein Schutzgas zugeführt werden kann. Die Hohlelektrode kann auch mit Kühlwasserkanälen ausgebildet sein.

Die Einschnürung durch das Fokussiergas und/oder die genannte Fokussiergasdüse führt zu einem deutlich verringerten Lichtbogenquerschnitt im Vergleich zu frei brennenden Lichtbogen. Es entsteht eine nahezu zylindrische Lichtbogenentladung hoher Leistungsdichte. Plasmaverfahren unterscheiden sich damit von Lichtbogenverfahren im Wesentlichen durch die Bereitstellung von Mitteln zur Einschnürung des Lichtbogens. Bei Plasmaverfahren wird ein hoher Ionisationsgrad bewirkt, der eine besonders gute Lichtbogenstabilität zur Folge hat. Plasmaverfahren sind insbesondere bei kleinen Stromstärken von unter einem Ampere von Vorteil gegenüber herkömmlichen Lichtbogenverfahren.

Ein Schweißgerät mit einem zuvor erläuterten Schweißbrenner ist ebenfalls Gegenstand der vorliegenden Erfindung. Ein derartiges Schweißgerät weist Mittel auf, die zum Bereitstellen des Schweißzusatzwerkstoffs an die zuvor erläuterten Führungsmittel eingerichtet sind. Ferner ist wenigstens eine Prozessgaseinrichtung vorgesehen, die zur Bereitstellung wenigstens eines Prozessgases an eine Schweißdüse des Schweißbrenners eingerichtet ist. Ein entsprechendes Schweißgerät verfügt ferner über eine geeignete Schweißstromquelle, die zur Beaufschlagung des Schweißstromanschlusses mit einem Schweißstrom eingerichtet ist. Sämtliche dieser Mittel sind vorzugsweise mit einer geeigneten Steuereinrichtung verbunden, die es ermöglicht, sämtliche Parameter des Schweißvorgangs einzustellen.

Ein Schweißverfahren, bei dem der zuvor erläuterte Schweißbrenner und/oder ein entsprechendes Schweißgerät verwendet wird, ist ebenfalls Gegenstand der Erfindung. Bei einem solchen Schweißverfahren werden die Hohlelektrode mit einem Schweißstrom beaufschlagt und der Schweißzusatzwerkstoff potentialfrei geführt. Zu den Merkmalen und Vorteilen des erfindungsgemäßen Schweißverfahrens sei auf die zuvor erläuterten Punkte verwiesen.

Insbesondere kann ein entsprechendes Schweißverfahren als WIG- oder Plasmaverfahren durchgeführt werden. Die jeweiligen Verfahrensmerkmale dieser Verfahren wurden zuvor erläutert. Insbesondere kann beim Plasmaschweißen ein übertragener oder ein nicht übertragener Lichtbogen eingesetzt werden, also ein Lichtbogen, der zwischen dem Schweißbrenner und dem Werkstück oder nur innerhalb des Brenners gezündet wird. Auch Kombinationen sind möglich.

Ein besonders vorteilhaftes Verfahren umfasst, den Lichtbogen mittels eines um die mehrfach erläuterte Achse anliegenden Magnetfelds und/oder elektrischen Felds in Rotation zu versetzen, wodurch der Lichtbogen am Umfang der Hohlelektrode entlang rotiert (umläuft) und der Prozess dadurch stabilisiert wird.

Insbesondere umfasst die vorliegende Erfindung auch die Verwendung eines oder mehrerer Prozessgase in einem Schweißbrenner, wie er zuvor erläutert wurde bzw. einem entsprechenden Schweißgerät bzw. -verfahren, wobei das oder die Prozessgase sowohl die Metallurgie des zu verbindenden Werkstoffs und des Zusatzwerkstoffs berücksichtigen müssen, als auch die Verträglichkeit mit der nicht abschmelzenden Hohlelektrode. Im Wesentlichen kann es sich hierbei um Argon oder argonbasierte Gasmischungen mit zusätzlichen inerten (Helium), oxidierenden (Sauerstoff und/oder Kohlendioxid), reduzierenden (Wasserstoff) oder reaktiven (Stickstoff und Stickstoffverbindungen) Komponenten handeln.

Die vorliegende Erfindung wird unter Bezugnahme auf die beigefügten Zeichnungen näher erläutert, welche bevorzugte Ausführungsformen der Erfindung zeigen.

### Kurze Beschreibung der Zeichnungen

Figur 1 zeigt einen Schweißbrenner gemäß einer Ausführungsform der Erfindung in schematischer Längsschnittdarstellung.
Figur 2 zeigt einen Schweißbrenner gemäß einer Ausführungsform der Erfindung in schematischer Längsschnittdarstellung.
Figur 3 zeigt ein Schweißgerät gemäß einer Ausführungsform der Erfindung in schematischer Darstellung.

In den Figuren sind einander entsprechende Elemente mit identischen Bezugszeichen angegeben und werden der Übersichtlichkeit halber nicht wiederholt erläutert.

### Ausführliche Beschreibung der Zeichnungen

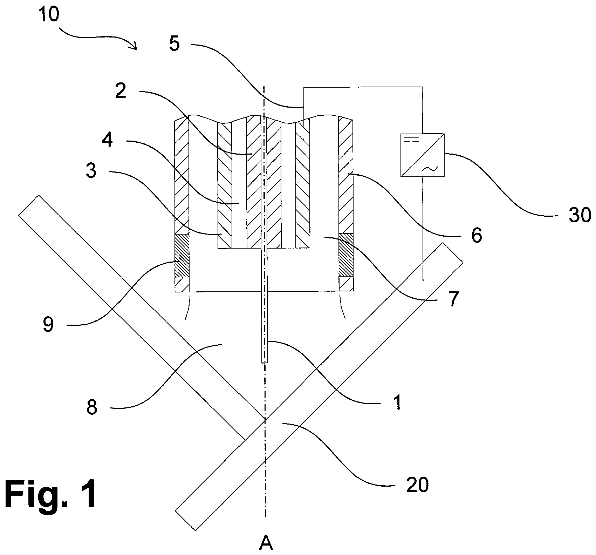

Figur 1 zeigt einen Schweißbrenner gemäß einer Ausführungsform der Erfindung in schematischer Längsschnittdarstellung. Der Schweißbrenner ist nur zum Teil dargestellt und insgesamt mit 10 bezeichnet. Die Figur 1 zeigt dabei das distale Ende des Schweißbrenners 10, das auf ein Werkstück 20, gebildet aus zwei nicht näher bezeichneten Elementen, gerichtet ist.

Der Schweißbrenner 10 ist zur Führung eines drahtförmigen Schweißzusatzwerkstoffs 1 eingerichtet. Der drahtförmige Schweißzusatzwerkstoff 1, bei dem es sich um einen an sich bekannten Massiv- oder Fülldrahtzusatzwerkstoff handeln kann (auch mit ovalem, flachen oder anderem Querschnitt), wird mittels Führungsmitteln 2 im dargestellten Abschnitt des Schweißbrenners 10 potentialfrei entlang einer Achse A geführt. Die Führungsmittel 2 können im dargestellten Abschnitt des Schweißbrenners 10 beispielsweise als Führungshülse mit einem geeigneten Innendurchmesser ausgebildet sein.

Eine Hohlelektrode 3 umgibt die Achse A, entlang derer der Schweißzusatzwerkstoff 1 durch die Führungsmittel 2 im dargestellten Abschnitt des Schweißbrenners 10 geführt wird. Im dargestellten Beispiel ist die Hohlelektrode 3 zylindrisch ausgebildet, sie kann sich jedoch auch in Richtung des distalen Endes des Schweißbrenners 10, d.h. in Richtung auf das Werkstück 20, verjüngen. Die Hohlelektrode 3 kann in einer nicht dargestellten Elektrodenhalterung aufgenommen sein.

Zwischen der Hohlelektrode 3 und den Führungsmitteln 2 ist im dargestellten Beispiel ein ringförmiger Prozessgaskanal 4 ausgebildet, durch den ein geeignetes Prozessgas zugeführt werden kann. Beispielsweise kann über den Prozessgaskanal 4 ein zuvor erläutertes Plasmagas zugeführt werden, wenn der Schweißbrenner für ein entsprechendes Plasmaschweißverfahren eingesetzt werden soll.

Die Hohlelektrode 3 ist über einen hier nur schematisch veranschaulichten Schweißstromanschluss 5 mit einem Pol einer geeigneten Schweißstromquelle 30 verbunden. Die Hohlelektrode 3 kann auf diese Weise mit einem geeigneten Schweißstrom beaufschlagt werden, wie zuvor erläutert. Die Schweißstromquelle 30 ist vorzugsweise zur Bereitstellung eines Gleich- und/oder Wechselstroms eingerichtet. Das Werkstück 20 ist im dargestellten Beispiel an den anderen Pol der Schweißstromquelle 30 angeschlossen, wodurch ein Lichtbogen zwischen der Hohlelektrode 3 und dem Werkstück 20 ausgebildet werden kann (übertragener Lichtbogen). In gleicher Weise kann jedoch auch ein anderes Element des Schweißbrenners 10 mit dem anderen Pol der Schweißstromquelle verbunden werden, so dass sich zwischen der Hohlelektrode 3 und diesem anderen Element des Schweißbrenners ein Lichtbogen ausbildet ("nicht übertragener" Lichtbogen).

Die Anordnung aus den Führungsmitteln 2 mit dem darin geführten Schweißzusatzwerkstoff 1, der Hohlelektrode 3 und dem Prozessgaskanal 4 ist im dargestellten Beispiel von einer Prozessgasdüse 6 umgeben, durch die gleichzeitig ein weiterer ringförmiger Prozessgaskanal 7 außerhalb der Hohlelektrode 3 definiert wird. Der ringförmige Prozessgaskanal 7 umgibt die Achse A ebenfalls koaxial. Beispielsweise kann durch eine geeignete Zufuhr eines Schutzgases über den Prozessgaskanal 7 ein Bereich 8 vollständig mit Schutzgas abgedeckt werden, so dass keine Oxidation des Werkstücks 20 und/oder einer Schweißnaht eintritt.

Wird, wie erläutert, der Schweißbrenner 10 für ein Plasmaverfahren verwendet, kann über die Düse 6 auch ein Fokussiergas zugeführt werden. Die Prozessgasdüse 6 kann hierzu beispielsweise auch als konische Fokussiergasdüse ausgebildet sein und/oder eine geeignete Kühleinrichtung aufweisen.

Die dargestellte Anordnung kann auch von weiteren Prozessgasdüsen umgeben sein, die zur Zuführung zusätzlicher Prozessgase verwendet werden können. Wird über den ringförmigen Prozessgaskanal 4 beispielsweise ein Plasmagas und über den ringförmigen Prozessgaskanal 7 beispielsweise ein Fokussiergas zugeführt, kann über eine weitere außenliegende Düse beispielsweise ein Schutzgas zugeführt werden.

In der Prozessgasdüse 6 ist im dargestellten Beispiel eine stark schematisiert dargestellte Spulenanordnung 9 angeordnet, die von einer (nicht gezeigten) Spannungsquelle gespeist werden kann. Die Spulenanordnung 9 kann insbesondere auch mehrere um einen Umfang der Düse 6 verteilte Einzelspulen aufweisen, die beispielsweise nach Art eines Stators einer elektrischen Maschine angeordnet sein können. Mittels einer aus dem Bereich der Elektrotechnik bekannten Ansteuerung kann durch die Spulenanordnung 9 ein um die Achse A anliegendes elektrisches Feld bzw. Magnetfeld erzeugt werden, durch das ein sich zwischen der Hohlelektrode 3 und dem Werkstück ausbildender (übertragener) und/oder ein sich zwischen der Hohlelektrode 3 und einem anderen Element des Schweißbrenners 10 ausbildender (nicht übertragener) Lichtbogen in eine Rotationsbewegung um die Achse A versetzt werden kann. Die Spule (oder entsprechend verteilte Magnete), die das Feld induziert und die Rotationsbewegung des Lichtbogens verursacht, kann auch an anderen Stellen des Brenners, entweder in den Körper des Brenners integriert oder innerhalb/außerhalb hiervon angebracht werden.

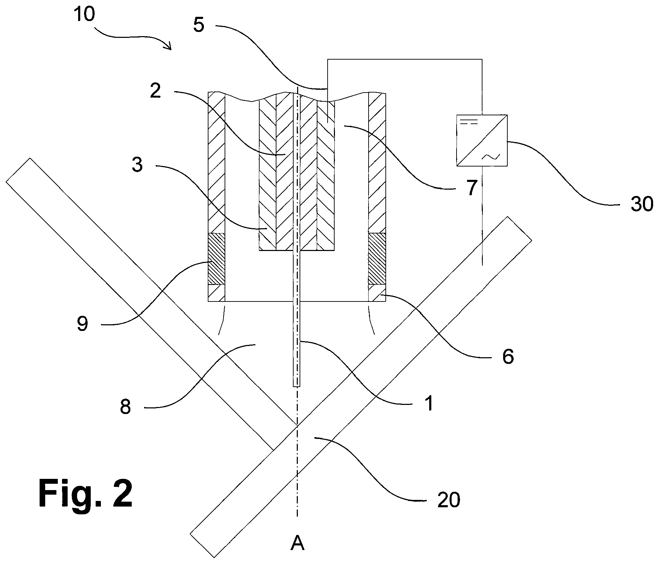

Figur 2 zeigt einen Schweißbrenner 10 gemäß einer weiteren Ausführungsform der Erfindung. Der Schweißbrenner 10 in Figur 2 entspricht im Wesentlichen jenem der Figur 1, ist jedoch gegenüber diesem vereinfacht. Der Schweißbrenner 10 der Figur 2 verfügt über sämtliche Elemente des Schweißbrenners 10 der Figur 1, jedoch nicht über den ringförmigen Prozessgaskanal 4. Er ist dadurch einfacher herzustellen und ermöglicht eine unaufwendigere Ansteuertechnik. Allerdings verringert sich hierdurch ggf. die Flexibilität in den durch einen entsprechenden Schweißbrenner 10 realisierbaren Schweißverfahren. So ist beispielsweise keine getrennte Zuführung von Fokussiergas und Plasmagas möglich.

In dem in Figur 2 dargestellten Beispiel müssen die Führungsmittel 2 isolierend ausgebildet und/oder gegenüber der Hohlelektrode 3 isoliert sein, um sicherzustellen, dass der Schweißzusatzwerkstoff 1 potentialfrei ist.

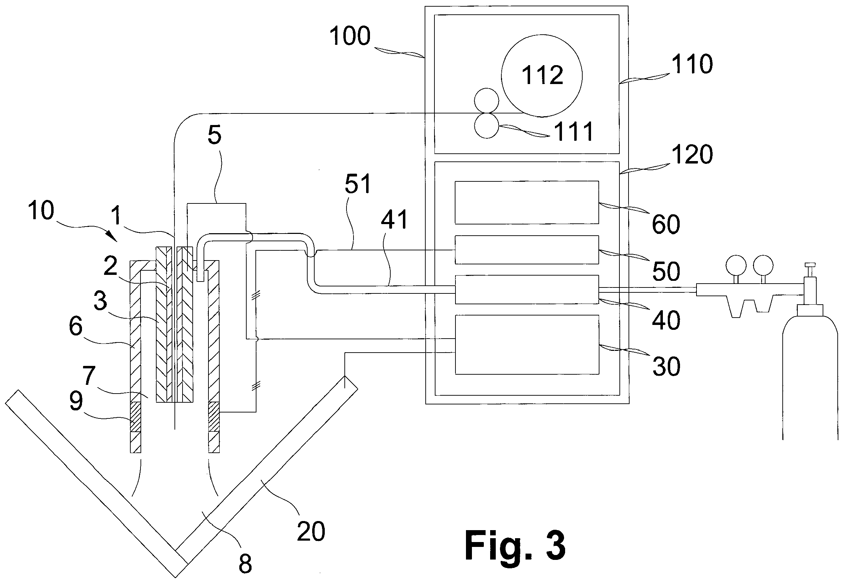

In Figur 3 ist ein Schweißgerät schematisch dargestellt, das den Schweißbrenner 10 der Figur 2 aufweist. Das Schweißgerät ist insgesamt mit 100 bezeichnet und kann auch Schweißbrenner 10 in andrerer Ausführung aufweisen, beispielsweise den Schweißbrenner 10 der Figur 1.

Das Schweißgerät 100 umfasst eine Vorschubeinheit 110 für den drahtförmigen Zusatzwerkstoff 1, der in dieser mittels motorgetriebener Vorschubwalzen 111 von einer Rolle 112 abgewickelt und an die Führungsmittel 2 bereitgestellt werden kann.

Das Schweißgerät 100 umfasst ferner eine Steuer- und Regeleinheit 120, in der im dargestellten Beispiel die Schweißstromquelle 30, beispielsweise ein geeignet ausgebildeter Schweißtrafo, angeordnet sein kann. Die Schweißstromquelle 30 ist, wie erläutert, mit einem Pol über den Schweißstromanschluss 5 an die Hohlelektrode 3 angeschlossen und kann mit dem anderen Pol an das Werkstück 20 oder an ein weiteres Element des Schweißbrenners 10 angeschlossen sein.

Zur Bereitstellung wenigstens eines Prozessgases kann eine Prozessgaseinheit 40 vorgesehen sein. Diese ist ihrerseits an wenigstens einen schematisch gezeigten Gasspeicher, beispielsweise an wenigstens eine Druckgasflasche, angeschlossen. Die Prozessgaseinheit 40 ist insbesondere dazu eingerichtet, einen Druck wenigstens eines Prozessgases, dessen Zusammensetzung und/oder dessen Volumenstrom, einzustellen. Insbesondere kann die Prozessgaseinheit 40 auch dazu eingerichtet sein, wenigstens einen pulsierenden Prozessgasstrom bereitzustellen. Die Prozessgaseinheit 40 ist im dargestellten Beispiel über eine Leitung 41 mit dem ringförmigen Prozessgaskanal 7 verbunden. Die Darstellung ist stark vereinfacht, insbesondere kann eine derartige Verbindung auch mehrere Düsen oder Düsenanordnungen umfassen. Es versteht sich, dass auch mehrere Prozessgaseinheiten vorgesehen sein können und/oder eine Prozessgaseinheit 40 mit mehreren ringförmigen Prozessgaskanälen 4, 7 verbunden sein kann.

Die Spuleneinheit 9 kann über eine entsprechende Leitung 51, beispielsweise eine dreiphasige Leitung 51, mit einer entsprechenden Stromquelle 50 verbunden sein. Die Stromquelle 50 kann beispielsweise geeignete (Puls-)Wechselrichter und Ansteuereinheiten zur Bereitstellung geeigneter Ströme aufweisen.

Die Schweißstromquelle 30, die Prozessgaseinheit 40 und die Stromquelle 50 können mittels einer Steuereinrichtung 60, die beispielsweise auch an einen externen Steuerrechner angeschlossen sein kann, angesteuert werden. Die Steuereinrichtung 60 kann über geeignete Regelmittel verfügen und an nicht dargestellte Sensorleitungen angeschlossen sein. Die Steuereinrichtung 60 kann auch ein geeignetes Schweißprogramm speichern und ausführen.

Das Schweißgerät 100 kann auch (nicht dargestellte) Mittel zur Bereitstellung von Kühlwasser, Benutzereingabeeinheiten, digitale und/oder analoge Anzeigen und dergleichen umfassen.

## Patentansprüche

1. Schweißbrenner (10) mit Führungsmitteln (2), die dazu ausgebildet sind, einen drahtförmigen Schweißzusatzwerkstoff (1) zumindest in einem Abschnitt des Schweißbrenners (10) mechanisch entlang einer Achse (A) zu führen, mit wenigstens einer Prozessgasdüse (6), die zumindest die Führungsmittel (2) koaxial umgibt, und mit einem Schweißstromanschluss (5), der mit einem zur Stromführung eingerichteten Element des Schweißbrenners (10) leitend verbunden ist, wobei eine Hohlelektrode (3), die die Achse (A) koaxial umgibt und die als das zur Stromführung eingerichtete Element mit dem Schweißstromanschluss (8) leitend verbunden ist, wobei die Führungsmittel (2) dazu ausgebildet sind, den Schweißzusatzwerkstoff (1) ohne elektrische Verbindung mit dem Schweißstromanschluss (8) potentialfrei zu führen, **dadurch gekennzeichnet, dass** der Schweißbrenner (10) ferner eine Spulen- und/oder Magnetanordnung (9) aufweist, die zur Bereitstellung eines um die Achse (A) anliegenden elektrischen und/oder magnetischen Felds eingerichtet und dazu ausgebildet ist, einen von der Hohlelektrode (3) ausgehenden Lichtbogen um die Achse (A) rotieren zu lassen, wobei die Spulenanordnung in den Schweißbrenner (10) integriert und durch eine geeignete Strombeaufschlagung den um die Achse (A) anliegenden elektrischen und/oder magnetischen Feld erzeugt.

2. Schweißbrenner (10) nach Anspruch 1, bei dem die Hohlelektrode (3) zumindest abschnittsweise zylindrisch und/oder konisch verläuft.

3. Schweißbrenner (10) nach einem der vorstehenden Ansprüche, bei dem die Hohlelektrode (3) als nicht abschmelzende Elektrode ausgebildet ist.

4. Schweißbrenner (10) nach einem der vorstehenden Ansprüche, der einen ringförmigen Prozessgaskanal (4) aufweist, der die Achse (A) koaxial umgibt und radial innerhalb der Hohlelektrode (3) angeordnet ist.

5. Schweißbrenner (10) nach einem der vorstehenden Ansprüche, der einen ringförmigen Prozessgaskanal (7) aufweist, der die Achse (A) koaxial umgibt und radial außerhalb der Hohlelektrode (3) angeordnet ist.

6. Schweißbrenner (10) nach einem der vorstehenden Ansprüche, bei dem die Prozessgasdüse (6) zum Einschnüren eines unter Verwendung eines Plasmagases erzeugten Plasmastrahls ausgebildet ist.

7. Schweißgerät (100), das einen Schweißbrenner (10) nach einem der vorstehenden Ansprüche, eine Vorschubeinrichtung (110), die zum Bereitstellen des drahtförmigen Schweißzusatzwerkstoffs (1) an die Führungsmittel (2) eingerichtet ist, eine Prozessgaseinheit (40), die zur Bereitstellung wenigstens eines Prozessgases an die Prozessgasdüse (6) des Schweißbrenners (10) eingerichtet ist, und eine Schweißstromquelle (30), die zur Beaufschlagung des Schweißstromanschlusses (5) mit einem Schweißstrom eingerichtet ist, aufweist.

8. Schweißgerät (100) nach Anspruch 7, bei dem die Prozessgaseinheit (40) zur Bereitstellung zumindest eines pulsierenden Prozessgasstroms eingerichtet ist.

9. Schweißverfahren, bei dem ein Schweißbrenner (10) nach einem der Ansprüche 1 bis 6 und/oder ein Schweißgerät nach Anspruch 7 oder 8 verwendet wird, wobei der Prozessgasdüse (6) des Schweißbrenners (10) ein Prozessgas zugeführt und der Schweißzusatzwerkstoff (1) mittels der Führungsmittel (2) ohne elektrische Verbindung mit dem Schweißstromanschluss (8) potentialfrei geführt wird.

10. Schweißverfahren nach Anspruch 9, das als Wolframinertgas- oder Plasmaschweißverfahren durchgeführt wird.

11. Schweißverfahren nach Anspruch 9 oder 10, bei dem ein übertragener oder ein nicht übertragener Lichtbogen erzeugt wird.

12. Schweißverfahren nach Anspruch 10, bei dem der Lichtbogen mittels eines um die Achse (A) anliegenden elektrischen Felds oder mittels eines um die Achse (A) anliegenden Magnetfelds in Rotation versetzt wird.

13. Schweißverfahren nach einem der Ansprüche 9 bis 12, bei dem ein pulsierender Schweißstrom und/oder ein Schweißstrom wechselnder Polarität verwendet wird.

14. Schweißverfahren nach einem der Ansprüche 9 bis 13, bei dem ein Fülldraht oder Massivdraht mit einem beliebigen Querschnitt als Schweißzusatzwerkstoff (1) verwendet wird.

15. Verwendung eines Prozessgases in einem Schweißbrenner (10) nach einem der Ansprüche 1 bis 6, in einem Schweißgerät (100) nach Anspruch 7 oder 8 und/oder in einem Verfahren nach einem der Ansprüche 10 bis 15, wobei das Prozessgas zumindest der Prozessgasdüse (6) zugeführt wird.

16. Verwendung nach Anspruch 15, wobei das Prozessgas als Plasmagas, Fokussiergas und/oder Schutzgas verwendet wird.

## Claims

1. Welding torch (10) comprising guidance means (2) designed to guide a wire-like welding filler material (1) mechanically along an axis (A) at least in a section of the welding torch (10), comprising at least one process gas nozzle (6), which coaxially surrounds at least the guidance means (2), and comprising a welding current terminal (5), which is connected in a conducting manner to an element of the welding torch (10) that is configured for conducting current, wherein a hollow electrode (3), which coaxially surrounds the axis (A) and, as the element configured for conducting current, is connected in a conducting manner to the welding current terminal (8), wherein the guidance means (2) are designed to guide the welding filler material (1) in a potential-free manner with no electrical connection to the welding current terminal (8), **characterized in that** the welding torch (10) also has a coil and/or magnet arrangement (9), which is configured for providing an electric and/or magnetic field applied around the axis (A) and is designed to make an arc emanating from the hollow electrode (3) rotate about the axis (A), wherein the coil arrangement is integrated in the welding torch (10) and, by being suitably supplied with current, produces the electric and/or magnetic field applied around the axis (A).

2. Welding torch (10) according to Claim 1, in which at least one or more sections of the hollow electrode (3) is cylindrical or conical in shape.

3. Welding torch (10) according to either of the preceding claims, in which the hollow electrode (3) is formed as a non-melting electrode.

4. Welding torch (10) according to one of the preceding claims, which comprises an annular process gas duct (4), which coaxially surrounds the axis (A) and is arranged radially inside the hollow electrode (3).

5. Welding torch (10) according to one of the preceding claims, which comprises an annular process gas duct (7), which coaxially surrounds the axis (A) and is arranged radially outside the hollow electrode (3).

6. Welding torch (10) according to one of the preceding claims, in which the process gas nozzle (6) is designed to constrict a plasma jet that is produced using a plasma gas.

7. Welding device (100), which comprises a welding torch (10) according to one of the preceding claims, an advancing device (110), which is configured for providing the wire-like welding filler material (1) to the guidance means (2), a process gas unit (40), which is configured for providing at least one process gas to the process gas nozzle (6) of the welding torch (10), and a welding current source (30), which is configured for supplying the welding current terminal (5) with a welding current.

8. Welding device (100) according to Claim 7, in which the process gas unit (40) is configured for providing at least one pulsating process gas stream.

9. Welding method, in which a welding torch (10) according to one of Claims 1 to 6 and/or a welding device according to Claim 7 or 8 is used, wherein the process gas nozzle (6) of the welding torch (10) is fed a process gas and the welding filler material (1) is guided in a potential-free manner by means of the guidance means (2) with no electrical connection to the welding current terminal (8).

10. Welding method according to Claim 9, which is carried out as a tungsten inert-gas or plasma welding method.

11. Welding method according to Claim 9 or 10, in which a transferred arc or a non-transferred arc is produced.

12. Welding method according to Claim 10, in which the arc is set in rotation by means of an electric field applied around the axis (A) or by means of a magnetic field applied around the axis (A).

13. Welding method according to one of Claims 9 to 12, in which a pulsating welding current and/or a welding current of alternating polarity is used.

14. Welding method according to one of Claims 9 to 13, in which a filling wire or a solid wire of any desired cross section is used as the welding filler material (1).

15. Use of a process gas in a welding torch (10) according to one of Claims 1 to 6, in a welding device (100) according to Claim 7 or 8 and/or in a method according to one of Claims 10 to 15, wherein the process gas is fed at least to the process gas nozzle (6).

16. Use according to Claim 15, wherein the process gas is used as a plasma gas, focusing gas and/or shielding gas.

## Revendications

1. Brûleur de soudage (10) avec des moyens de guidage (2), qui sont conçus pour guider mécaniquement le long d'un axe (A) un matériau d'apport de soudage en forme de fil (1) au moins dans une partie du brûleur de soudage (10), avec au moins une buse à gaz de processus (6), qui entoure coaxialement au moins les moyens de guidage (2), et avec un raccord de courant de soudage (5), qui est connecté de façon conductrice à un élément du brûleur de soudage (10) conçu pour le guidage de courant, dans lequel une électrode creuse (3), qui entoure coaxialement l'axe (A) et qui est reliée de façon conductrice au raccord de courant de soudage (8) en tant qu'élément conçu pour le guidage de courant, dans lequel les moyens de guidage (2) sont réalisés de façon à guider le matériau d'apport de soudage (1) sans potentiel sans liaison électrique avec le raccord de courant de soudage (8), **caractérisé en ce que** le brûleur de soudage (10) présente en outre un agencement de bobines et/ou d'aimants (9), qui est conçu de façon à créer un champ électrique et/ou un champ magnétique situé autour de l'axe (A) et qui est configuré de façon à faire tourner autour de l'axe (A) un arc électrique émanant de l'électrode creuse (3), dans lequel l'agencement de bobines est intégré dans le brûleur de soudage (10) et produit par une alimentation en courant appropriée le champ électrique et/ou magnétique situé autour de l'axe (A).

2. Brûleur de soudage (10) selon la revendication 1, dans lequel l'électrode creuse (3) s'étend au moins en partie sous forme cylindrique et/ou conique.

3. Brûleur de soudage (10) selon l'une quelconque des revendications précédentes, dans lequel l'électrode creuse (3) est formée par une électrode non fusible.

4. Brûleur de soudage (10) selon l'une quelconque des revendications précédentes, qui présente un canal de gaz de processus annulaire (4), qui entoure coaxialement l'axe (A) et qui est disposé radialement à l'intérieur de l'électrode creuse (3).

5. Brûleur de soudage (10) selon l'une quelconque des revendications précédentes, qui présente un canal de gaz de processus annulaire (7), qui entoure coaxialement l'axe (A) et qui est disposé radialement à l'extérieur de l'électrode creuse (3).

6. Brûleur de soudage (10) selon l'une quelconque des revendications précédentes, dans lequel la buse à gaz de processus (6) est configurée de façon à étrangler un jet de plasma produit en utilisant un gaz plasmagène.

7. Appareil de soudage (100), qui présente un brûleur de soudage (10) selon l'une quelconque des revendications précédentes, un dispositif d'avance (110), qui est conçu pour fournir le matériau d'apport de soudage sous forme de fil (1) aux moyens de guidage (2), une unité de gaz de processus (40), qui est conçue pour fournir au moins un gaz de processus à la buse à gaz de processus (6) du brûleur de soudage (10), et une source de courant de soudage (30), qui est conçue pour alimenter le raccord de courant de soudage (5) avec un courant de soudage.

8. Appareil de soudage (100) selon la revendication 7, dans lequel l'unité de gaz de processus (40) est conçue pour la fourniture d'au moins un flux de gaz de processus pulsé.

9. Procédé de soudage, dans lequel on utilise un brûleur de soudage (10) selon l'une quelconque des revendications 1 à 6 et/ou un appareil de soudage selon la revendication 7 ou 8, dans lequel on envoie un gaz de processus à la buse à gaz de processus (6) du brûleur de soudage (10) et on guide le matériau d'apport de soudage (1) au moyen des moyens de guidage (2) sans potentiel sans liaison électrique avec le raccord de courant de soudage (8).

10. Procédé de soudage selon la revendication 9, que l'on met en oeuvre sous forme de procédé de soudage sous gaz inerte avec électrode de tungstène ou de procédé de soudage au plasma.

11. Procédé de soudage selon la revendication 9 ou 10, dans lequel on produit un arc électrique transféré ou non transféré.

12. Procédé de soudage selon la revendication 10, dans lequel on met l'arc électrique en rotation au moyen d'un champ électrique situé autour de l'axe (A) ou au moyen d'un champ magnétique situé autour de l'axe (A).

13. Procédé selon l'une quelconque des revendications 9 à 12, dans lequel on utilise un courant de soudage pulsé et/ou un courant de soudage à polarité alternative.

14. Procédé de soudage selon l'une quelconque des revendications 9 à 13, dans lequel on utilise un fil fourré ou un fil massif avec une section transversale quelconque comme matériau d'apport de soudage (1).

15. Utilisation d'un gaz de processus dans un brûleur de soudage (10) selon l'une quelconque des revendications 1 à 6, dans un appareil de soudage (100) selon la revendication 7 ou 8 et/ou dans un procédé selon l'une quelconque des revendications 10 à 15, dans lequel on envoie le gaz de processus au moins à la buse à gaz de processus (6).

16. Utilisation selon la revendication 15, dans laquelle on utilise le gaz de processus sous forme de gaz plasmagène, de gaz de concentration et/ou de gaz de protection.
